(19) Europäisches Patentamt / European Patent Office / Office européen des brevets

(11) **EP 3 792 329 A1**

(12) **EUROPEAN PATENT APPLICATION**

(43) Date of publication:
**17.03.2021  Bulletin 2021/11**

(21) Application number: **19197503.6**

(22) Date of filing: **16.09.2019**

(51) Int Cl.:
**C09K 5/04** *(2006.01)*          **C09K 5/10** *(2006.01)*
**B60H 1/32** *(2006.01)*          **F25B 15/00** *(2006.01)*
**F25B 27/02** *(2006.01)*          **B01D 53/26** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Evonik Operations GmbH**
**45128 Essen (DE)**

(72) Inventors:
• **WANG, Dr., Xinming**
**242-0003 Kanagawa-ken (JP)**

• **AOKI, Tetsuji**
**350-1115 Saitama-ken (JP)**
• **SCHNEIDER, Rolf**
**63584 Gründau-Rothenbergen (DE)**
• **KERL, Dr. Thomas**
**45130 Essen (DE)**
• **DÄSCHLEIN, Dr., Christian**
**44625 Herne (DE)**

(74) Representative: **Evonik Patent Association**
**c/o Evonik Industries AG**
**IP Management**
**Bau 1042A/PB 15**
**Paul-Baumann-Straße 1**
**45772 Marl (DE)**

(54) **VEHICLE SYSTEM AND PROCESS FOR EFFICIENT USE OF WASTE HEAT FROM THE POWER UNIT**

(57)    The present invention pertains to a vehicle in which waste heat from the vehicle power unit is used to drive a water absorption cycle. The invention also pertains to a process for combined cooling of a power unit and absorbing water in a vehicle. The gist of the invention lies in the use of the same substance as absorbent and as coolant for the power unit. The device and the process according to the invention can be implemented in the context of a vehicle, wherein the waste heat from the motor or battery is used to dehumidify air. Alternatively, the waste heat is used to drive an absorption refrigeration machine that is used to cool the inside of the vehicle or other vehicle components.

## Description

The present invention pertains to a vehicle in which waste heat from the vehicle power unit is used to drive a water absorption cycle. The invention also pertains to a process for combined cooling of a power unit and absorbing water in a vehicle. The gist of the invention lies in the use of the same substance as absorbent and as coolant for the power unit. The device and the process according to the invention can be implemented in the context of a vehicle, wherein the waste heat from the motor or battery is used to dehumidify air. Alternatively, the waste heat is used to drive an absorption refrigeration machine that is used to cool the inside of the vehicle or other vehicle components.

## 1. Technological Background

With the mega trend of electrical and electrical/engine hybrid vehicles, high efficiency cooling for batteries and motors is highly demanded. Correspondingly, engines, batteries, or other power units in the industrial context generate waste heat that for sake of energy efficiency should be used better than being dissipated into the environment.

In the prior art, several systems are described that furnish waste heat from power units for different tasks.

US 2006/0130469 A1 describes a combined system in which combustion heat from a burner can be transmitted to a circuit for heating or cooling parts of the vehicle.

JP S57-81910 U, JPH 03-112718 A, and JP H03-193525 A describe systems in which a coolant absorbs heat from a motor. The coolant is then contacted with an absorbent comprising lithium bromide and water. The water is then at least partially evaporated by using heat from the coolant, the obtained water vapour is condensed and evaporated again, thereby using heat from the inside of the car. By this, cooling of the motor is combined with cooling of the interior of the car.

US 2012/0031131 A1 similarly describes an absorption refrigeration machine in a vehicle which uses heat from a power unit device. The working fluids used in the circuit of the absorption refrigeration machine are lithium bromide/water and ammonia/water.

JP 2002-234336 A describes a car comprising an absorption-type refrigeration machine that uses sunlight to cool the inside of the car when the car is parked.

JP 2012-141101 A describes an absorption refrigeration machine for cooling the inside of a car or a house which uses energy from a solar heat collector. It discloses organic refrigerants methanol and acetone which display less corrosiveness as compared to lithium bromide/water or ammonia/water.

JP H11-159905 A describes an air conditioner that uses another organic refrigerator, namely fluorocarbon gases such as R-134a and R-22.

The vehicle systems described in the prior art use waste heat from the power unit of the vehicle to drive an absorption refrigeration machine that is used to cool the interior of a car. These systems rely on the efficient transfer of energy from the power unit, in this case the motor, to the aqueous absorbent. There is a need in the art for a system in a vehicle in which the transfer of heat from the motor to the absorbent containing water is maximized.

The problem according to the invention is therefore the provision of a vehicle and a process in a vehicle wherein the transfer of heat from the power unit to the absorbent, which is preferably used in a refrigeration absorption machine, is further improved.

This problem is now surprisingly solved by the vehicle and the process according to the invention.

## 2. Summary of the Invention

In a first aspect, the invention relates to a vehicle, comprising:

a) at least one water absorption unit component **WAC**, comprising

(a-i) a liquid absorption medium $A_{VE}$,

(a-ii) at least one water absorption unit $W_{abs}$, which optionally comprises a heat exchanger, and which is set up for contacting a moist gas **G**, preferably water vapour, with the liquid absorption medium $A_{VE}$, to obtain an aqueous absorption medium $A_{VE}^*$ with an elevated water content compared to $A_{VE}$ and a gas $G^*$ with a reduced water content compared to the moist gas **G**,

(a-iii) at least one water desorption unit $W_{des}$, optionally comprising a heat exchanger,

(a-iv) and a circuit $U_{WAC}$ which connects the at least one water absorption unit $W_{abs}$ with the at least one water desorption unit $W_{des}$, and by means of which the absorption media $A_{VE}$ and $A_{VE}^*$ may be circulated between the water absorption unit $W_{abs}$ and the water desorption unit $W_{des}$,

and

b) at least one power unit component **PUC,** comprising

(b-i) a coolant **C,**

(b-ii) at least one power unit **PU,** which is preferably selected from the group consisting of motor **M,** battery **B,** and which is set up to transfer heat from the power unit **PU** onto the coolant **C,** to obtain a coolant **C\*** <301\*> with an elevated heat content as compared to coolant **C** <301>,

(b-iii) and a circuit $U_{PUC}$ which connects the at least one power unit **PU** with the at least one water desorption unit $W_{des}$ and by means of which the coolants **C** and **C\*** may be circulated between the at least one power unit **PU** and the at least one water desorption unit $W_{des}$,

wherein the coolant **C** and the liquid absorption medium $A_{VE}$ comprise the same at least one salt **S** selected from the group consisting of $Q^+A^-$, $Q^+(R^1O)_2PO_2^-$, $(Q^+)_2R^2OPO_3^{2-}$, $Q^+M^+R^3OPO_3^{2-}$,
wherein $Q^+$ is a dialkylimidazolium cation,
wherein $A^-$ is an anion selected from the group consisting of halogenide, $R^*COO^-$, $R'SO_3^-$, $HSO_4^-$, $R''SO_4^-$, HCOO ,
wherein $R^*$, $R'$, $R''$ are each independently of one another an alkyl group,
wherein $R^1$, $R^2$, $R^3$ are each independently of one another an alkyl group,
and wherein $M^+$ is an alkali metal ion,
characterized in
that the water desorption unit $W_{des}$ is set up

-   to at least partially desorb water by mixing coolant **C\*** and liquid absorption medium $A_{VE}^*$, to obtain water vapour $V_{H2O}$ and a mixture $M_S$, wherein the mixture $M_S$ comprises the same at least one salt **S** comprised by the coolant **C** and the liquid absorption medium $A_{VE}$, and wherein the relative amount of water comprised by the mixture $M_S$ is less than the relative amount of water comprised by the mixture of coolant **C\*** and liquid absorption medium $A_{VE}^*$,

-   and to conduct a first part of a mixture $M_S$ as liquid absorption medium $A_{VE}$ from the water desorption unit $W_{des}$ to the water absorption unit $W_{abs}$,

-   and to conduct a second part of a mixture $M_S$ as coolant C from the water desorption unit $W_{des}$ to the power unit **PU.**

In a second aspect, the invention relates to a process for combined cooling of a power unit **PU,** and absorbing water from a moist gas **G,** preferably water vapour, in a vehicle, comprising the following steps:

(a) contacting a moist gas **G** with a liquid absorption medium $A_{VE}$, to obtain a liquid absorption medium $A_{VE}^*$ with an elevated water content compared to the liquid absorption medium $A_{VE}$, and a gas **G\*** with a reduced water content compared to the moist gas **G,**

(b) contacting a coolant **C** with a power unit **PU,** so that heat is transferred from the power unit **PU** to the coolant **C,** to obtain a coolant **C\*** with an elevated heat content as compared to coolant **C,**

(c) at least partially desorbing water by mixing coolant **C\*** with liquid absorption medium $A_{VE}^*$ so to obtain water vapour $V_{H2O}$ and a mixture $M_S$, wherein the mixture $M_S$ comprises the at least one salt **S** comprised by the coolant **C** and the liquid absorption medium $A_{VE}$, and wherein the relative amount of water comprised by the mixture $M_S$ is less than the relative amount of water comprised by the mixture of coolant **C\*** and liquid absorption medium $A_{VE}^*$,

wherein the coolant **C** and the liquid absorption medium $A_{VE}$ comprise the same at least one salt **S** selected from the group consisting of $Q^+A^-$, $Q^+(R^1O)_2PO_2^-$, $(Q^+)_2R^2OPO_3^{2-}$, $Q^+M^+R^3OPO_3^{2-}$,
wherein $Q^+$ is a dialkylimidazolium cation,
wherein $A^-$ is an anion selected from the group consisting of halogenide, $R^*COO^-$, $R'SO_3^-$, $HSO_4^-$, $R''SO_4^-$, HCOO ,
wherein $R^*$, $R'$, $R''$ are each independently of one another an alkyl group,
wherein $R^1$, $R^2$, $R^3$ are each independently of one another an alkyl group,
and wherein $M^+$ is an alkali metal ion.

**3. Figures**

Figure 1 ("Figure" is abbreviated as "Fig.") shows a preferred embodiment of a water desorption unit $W_{des}$ <100> according to the invention.

Figure 2 A shows a preferred embodiment of a water desorption unit $W_{des}$ <100> in combination with a water absorption unit $W_{abs}$ <200> according to the invention.

Figure 2 B shows a further preferred embodiment of a water desorption unit $W_{des}$ <100> in combination with a water absorption unit $W_{abs}$ <200> according to the invention.

Figure 3 A shows a preferred embodiment of a power unit component **PUC** <300> according to the invention, in which the power unit is a motor <303>.

Figure 3 B shows a further preferred embodiment of a power unit component **PUC** <300> according to the invention, in which the power unit is a battery <305>.

Figure 4 shows a preferred embodiment of a cooling component **WIC** <400> according to the invention.

Figure 5 shows a preferred embodiment according to the invention, namely a combination of a water desorption unit $W_{des}$ <100>, a water absorption unit $W_{abs}$ <200>, a power unit component **PUC** <300>, and a cooling component **WIC** <400>.

**4. Detailed Description of the Invention**

4.1 Vehicle

The vehicle according to the first aspect of the invention comprises a) at least one water absorption unit component **WAC** and b) at least one power unit component **PUC.**
The vehicle can be any vehicle which comprises a power unit and an absorption unit, where there is a need to use waste energy from the power unit to drive water absorption.
In a preferred embodiment, the vehicle according to the invention is selected from the group consisting of car, motorbike, plane, helicopter, ship, train, tram. Preferably, the vehicle according to the present invention is a car.

4.1.1 Water Absorption Unit Component **WAC**

The vehicle according to the first aspect of the invention comprises at least one water absorption unit component **WAC**. The term "water **ab**sorption unit component **WAC"** is merely used for simplicity, because, as can be seen from the following explanations, the water absorption unit component **WAC** also comprises i.a. a water **de**sorption unit. The expression "water absorption unit component **WAC"** should therefore not be understood to imply that **WAC** does not comprise a water desorption unit.

4.1.1.1 Liquid Absorption Medium $A_{VE}$

**WAC** comprises a liquid absorption medium $A_{VE}$. $A_{VE}$ comprises at least one salt **S** selected from the group consisting of $Q^+A^-$, $Q^+(R^1O)_2PO_2^-$, $(Q^+)_2R^2OPO_3^{2-}$, $Q^+M^+R^3OPO_3^{2-}$,
wherein $Q^+$ is a dialkylimidazolium cation,
wherein $A^-$ is an anion selected from the group consisting of halogenide, $R^*COO^-$, $R'SO_3^-$, $HSO_4^-$, $R''SO_4^-$, HCOO ,
wherein $R^*$, $R'$, $R''$ are each independently of one another an alkyl group,
wherein $R^1$, $R^2$, $R^3$ are each independently of one another an alkyl group,
and wherein $M^+$ is an alkali metal ion.
**S** is preferably selected from the group consisting of $Q^+A^-$, $Q^+(R^1O)_2PO_2^-$. Most preferably, **S** is $Q^+(R^1O)_2PO_2^-$.
The halogenide is selected from the group consisting of $F^-$, $Cl^-$, $Br^-$, $I^-$, preferably from the group consisting of $F^-$, $Cl^-$, $Br^-$, more preferably from the group consisting of $Cl^-$, $Br^-$. Most preferably, the halogenide is $Cl^-$.
The alkali metal ion is preferably selected from the group consisting of $Li^+$, $K^+$, $Na^+$, more preferably $K^+$, $Na^+$, most preferably $Na^+$.

$Q^+$ is a dialkylimidazolium cation, in which in particular the alkyl groups each independently have 1 to 10, preferably 1 to 8, more preferably 1 to 6, still more preferably 1 to 4, even more preferably 1 to 2 carbon atoms. Preferably, $Q^+$ is selected from the group consisting of 1,3-dimethylimidazolium, 1,3-diethylimidazolium, 1-ethyl-3-methylimidazolium, 1-butyl-3-methylimidazolium. More preferably, $Q^+$ is selected from the group consisting of 1,3-dimethylimidazolium, 1-ethyl-3-methylimidazolium. Most preferably $Q^+$ is 1-ethyl-3-methylimidazolium.

A is preferably selected from the group consisting of halogenide, $R^*COO^-$, $R'SO_3^-$, more preferably A is selected from the group consisting of acetate, proprionate, chloride, methyl sulphonate.

$R^*$, $R'$, $R''$ are each independently of one another an alkyl group, in particular with 1 to 10, preferably 1 to 8, more preferably 1 to 6, still more preferably 1 to 4, even more preferably 1 to 3, most preferably 1 to 2 carbon atoms, most preferably 1 carbon atom.

$R^1$, $R^2$, $R^3$ are each independently of one another an alkyl group, in particular with 1 to 10, preferably 1 to 8, more preferably 1 to 6, still more preferably 1 to 4, even more preferably 1 to 2 carbon atoms, most preferably 2 carbon atoms.

In a preferred embodiment of the first aspect of the invention, **S** is selected from the group consisting of $Q^+A^-$, $Q^+(R^1O)_2PO_2^-$, wherein preferably $Q^+$ is selected from the group consisting of 1,3-dimethylimidazolium, 1,3-diethylimidazolium, 1-ethyl-3-methylimidazolium, A is selected from the group consisting of $Cl^-$, acetate, proprionate, methyl sulphonate, and $R^1$ is an alkyl group with 1 to 10, preferably 1 to 8, more preferably 1 to 6, still more preferably 1 to 4, even more preferably 1 to 2 carbon atoms, most preferably 2 carbon atoms.

Even more preferably, **S** is selected from the group comprising 1,3-dimethylimidazolium chloride, 1-ethyl-3-methylimidazolium chloride, 1,3-dimethylimidazolium acetate, 1,3-dimethylimidazolium propionate, 1,3-dimethylimidazolium methyl sulphonate, 1,3-dimethylimidazolium monoethylphosphate, 1,3-dimethylimidazolium diethylphosphate, 1-ethyl-3-methylimidazolium diethylphosphate, 1-butyl-3-methylimidazolium dibutylphosphate, even more preferably selected from the group comprising 1,3-dimethylimidazolium acetate, 1,3-dimethylimidazolium propionate, 1,3-dimethylimidazolium methyl sulphonate, 1,3-dimethylimidazolium diethylphosphate, 1-ethyl-3-methylimidazolium diethylphosphate, 1-butyl-3-methylimidazolium dibutylphosphate.

In another preferred embodiment of the first aspect of the invention, **S** is $Q^+(R^1O)_2PO_2^-$, wherein preferably $Q^+$ is selected from the group consisting of 1,3-dimethylimidazolium, 1,3-diethylimidazolium, 1-ethyl-3-methylimidazolium, 1-butyl-3-methylimidazolium, more preferably selected from the group consisting of 1,3-dimethylimidazolium, 1-ethyl-3-methylimidazolium, 1-butyl-3-methylimidazolium, more preferably selected from the group consisting of 1,3-dimethylimidazolium, 1-ethyl-3-methylimidazolium, most preferably 1-ethyl-3-methylimidazolium,

and $R^1$ is an alkyl group with 1 to 10, preferably 1 to 8, more preferably 1 to 6, still more preferably 1 to 4, even more preferably 1 to 2 carbon atoms, most preferably 2 carbon atoms.

**S** is most preferably 1-ethyl-3-methylimidazolium diethylphosphate.

The liquid absorption medium $A_{VE}$ may be employed in the form of the pure salts of the structure $Q^+A^-$, $Q^+(R^1O)_2PO_2^-$, $(Q^+)_2R^2OPO_3^{2-}$, $Q^+M^+R^3OPO_3^{2-}$. Alternatively and preferably, the liquid absorption medium $A_{VE}$ is an aqueous solution in which the total weight of all salts of structure $Q^+A^-$, $Q^+(R^1O)_2PO_2^-$, $(Q^+)_2R^2OPO_3^{2-}$, $Q^+M^+R^3OPO_3^{2-}$ is at least 65 weight-% based on the total weight of the aqueous solution. It is more preferable when in the liquid absorption medium $A_{VE}$, the total weight of all salts of the structure $Q^+A^-$, $Q^+(R^1O)_2PO_2^-$, $(Q^+)_2R^2OPO_3^{2-}$, $Q^+M^+R^3OPO_3^{2-}$ is in the range of 65 to 99 weight-% based on the total weight of the aqueous solution. It is even more preferable when in the liquid absorption medium $A_{VE}$, the total weight of all salts of the structure $Q^+A^-$, $Q^+(R^1O)_2PO_2^-$, $(Q^+)_2R^2OPO_3^{2-}$, $Q^+M^+R^3OPO_3^{2-}$ is in the range of 65 to 90 weight-% based on the total weight of the aqueous solution. It is most preferable when in the liquid absorption medium $A_{VE}$, the total weight of all salts of the structure $Q^+A^-$, $Q^+(R^1O)_2PO_2^-$, $(Q^+)_2R^2OPO_3^{2-}$, $Q^+M^+R^3OPO_3^{2-}$ is in the range of 65 to 80 weight-%, even more preferable 70 to 80 weight-%, based on the total weight of the aqueous solution.

### 4.1.1.2 Water Absprptipn Unit $W_{abs}$

**WAC** comprises at least one water absorption unit $W_{abs}$, which optionally comprises a heat exchanger.

The water absorption unit $W_{abs}$ is set up for contacting a moist gas **G**, preferably water vapour, with the liquid absorption medium $A_{VE}$ to obtain an aqueous absorption medium $A_{VE}^*$ with an elevated water content compared to $A_{VE}$ and a gas $G^*$ with a reduced water content compared to moist gas **G.**

$A_{VE}^*$ corresponds to $A_{VE}$ and has an elevated water content compared to $A_{VE}$, which is the reason why $A_{VE}^*$ is "aqueous". Of note, the fact that $A_{VE}^*$ is "aqueous" does not mean that $A_{VE}$ cannot contain water. In some embodiments of the invention, $A_{VE}$ is also "aqueous".

The water content of $A_{VE}^*$ is preferably at least 1 weight-% higher than that of $A_{VE}$, more preferably at least 2 weight-% higher than that of $A_{VE}$, more preferably at least 3 weight-% higher than that of $A_{VE}$, more preferably at least 4 weight-% higher than that of $A_{VE}$, more preferably at least 5 weight-% higher than that of $A_{VE}$, more preferably at least 6 weight-% higher than that of $A_{VE}$, more preferably at least 7 weight-% higher than that of $A_{VE}$, more preferably at least 8 weight-% higher than that of $A_{VE}$, more preferably at least 9 weight-% higher than that of $A_{VE}$, more preferably at least 10 weight-% higher than that of $A_{VE}$.

These preferred embodiments also include the further preferable case in which the water content of $A_{VE}$* is in the range of 1 to 10 weight-% higher than that of $A_{VE}$, and likewise include the two preferred cases in which the water content of $A_{VE}$* is in the range of 1 to 5 weight-% higher than that of $A_{VE}$ or in which the water content of $A_{VE}$* is in the range of 2 to 10 weight-% higher than that of $A_{VE}$.

"Absorbing water" is to be understood as meaning in the context of the invention "at least partially absorbing water".

"At least partially" is to be understood as meaning in the context of the invention "partially or completely".

"Moist" is to be understood as meaning in the context of the invention "comprising water, in particular water vapour".

"Moist gas **G**" is accordingly to be understood as meaning in the context of the invention that the gas **G** comprises water, preferably water vapour ("water vapour" is to be understood as meaning water in the gaseous physical state), and that its composition is otherwise not subject to any particular restrictions. The water content of the moist gas **G** is not subject to any particular restrictions and is in particular from 0.01 vol% to 99.99 vol% ("vol%" indicates the volume of water vapour based on the overall volume of the moist gas mixture **G**). The composition of the moist gas **G** may otherwise vary depending on the application of the process according to the invention. The moist gas **G** is in particular selected from moist air (this may be moist indoor air or the moist air resulting from evaporation of water in absorption chillers). For moist air, the water content is in particular from 0.01 weight-% to 15.00 weight-% in the case of moist indoor air or in particular from 95.00 weight-% to 99.99 weight-% which is the preferred range when moist air resulting from evaporation of water in absorption chillers is concerned.

**G*** corresponds to **G** and has a reduced water content compared to the moist gas **G,** preferably reduced by at least 10 weight-%, more preferably reduced by at least 20 weight-%, more preferably reduced by at least 30 weight-%, more preferably reduced by at least 40 weight-%, more preferably reduced by at least 50 weight-%, more preferably reduced by at least 60 weight-%, more preferably reduced by at least 70 weight-%, more preferably reduced by at least 80 weight-%, more preferably reduced by at least 90 weight-%, more preferably reduced by at least 95 weight-%, more preferably reduced by at least 99 weight-%, compared to **G.**

Said absorbers are based on the principle of increasing the surface area of the liquid absorption medium $A_{VE}$ and simultaneously achieving the longest possible residence time of the liquid absorption medium $A_{VE}$ in the water absorber during absorption of water, for example those described in G. Vicatos, J. Gryzagoridis, S. Wang, Journal of Energy in Southern Africa 2008, 19 (4), 6-11 and A. Khan, H. M. Ali, S. Khushnood, S. S. Shah, M. Nouman Ali, Technical Journal, University of Engineering and Technology (UET) Taxila, Pakistan 2018, 23 (2), 24-34. It is in particular possible here to employ water absorbers selected from the group of: packed beds, spray columns, falling-films, bubble columns, tray columns, wet scrubbers (for example Venturi scrubbers), stirred tanks and combinations of these absorbers. It is particularly preferable to employ falling-films, in particular shell and fin-tube falling-films, as water absorbers.

The water absorption unit $W_{abs}$ optionally further comprises a heat exchanger which preferably is set up such that the liquid absorption medium $A_{VE}$ is coolable. Employable water absorption units $W_{abs}$ of this kind include in particular the water absorbers known to those skilled in the art.

4.1.1.3 Water Desorption Unit $W_{des}$

**WAC** comprises at least one water desorption unit $W_{des}$ which optionally comprises a heat exchanger.

The water desorption unit $W_{des}$ represents the gist of the present invention. It is set up

- to at least partially desorb water by mixing coolant **C*** and liquid absorption medium $A_{VE}$*, so to obtain water vapour $V_{H2O}$ and a mixture $M_S$, wherein the mixture $M_S$ comprises the same at least one salt **S** comprised by the coolant **C** and the liquid absorption medium $A_{VE}$, and wherein the relative amount of water comprised by the mixture $M_S$ is less than the relative amount of water comprised by the mixture of coolant **C*** and liquid absorption medium $A_{VE}$*,

- and to conduct a first part of a mixture $M_S$ as liquid absorption medium $A_{VE}$ from the water desorption unit $W_{des}$ to the water absorption unit $W_{abs}$,

- and to conduct a second part of a mixture $M_S$ as coolant **C** from the water desorption unit $W_{des}$ to the power unit **PU.**

The ratio between the first to the second part of the mixture $M_s$ is not further limited and in particular in the range of 99 : 1 to 1 : 99 (= first to second part of $M_s$ by weight), preferably 9 : 1 to 1 :9, more preferably 4 : 1 to 1 : 4, more preferably 7 : 3 to 3 : 7, more preferably 3 : 2 to 2 : 3, most preferably 1 : 1.

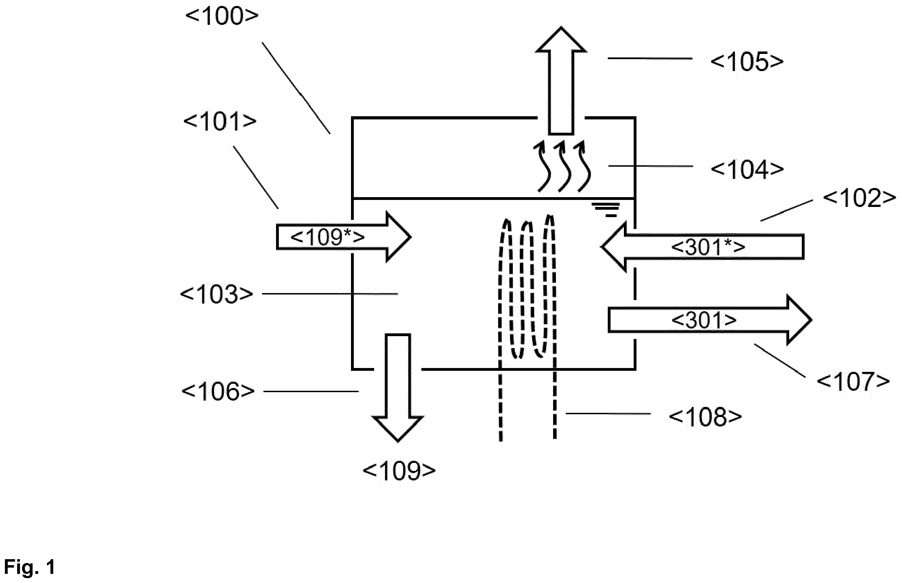

Atypical embodiment of a water desorption unit $W_{des}$ <100> is shown in Figure 1.

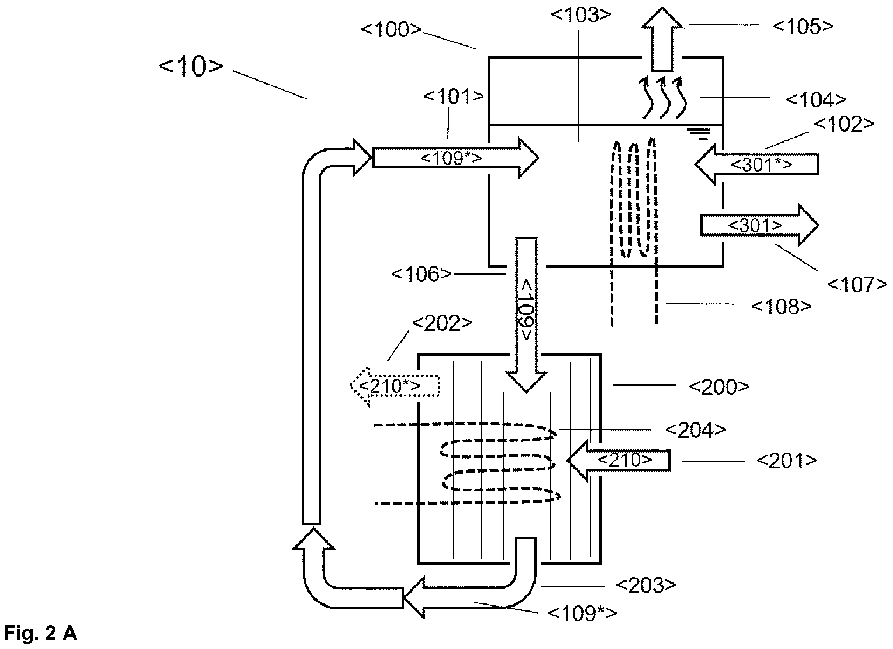

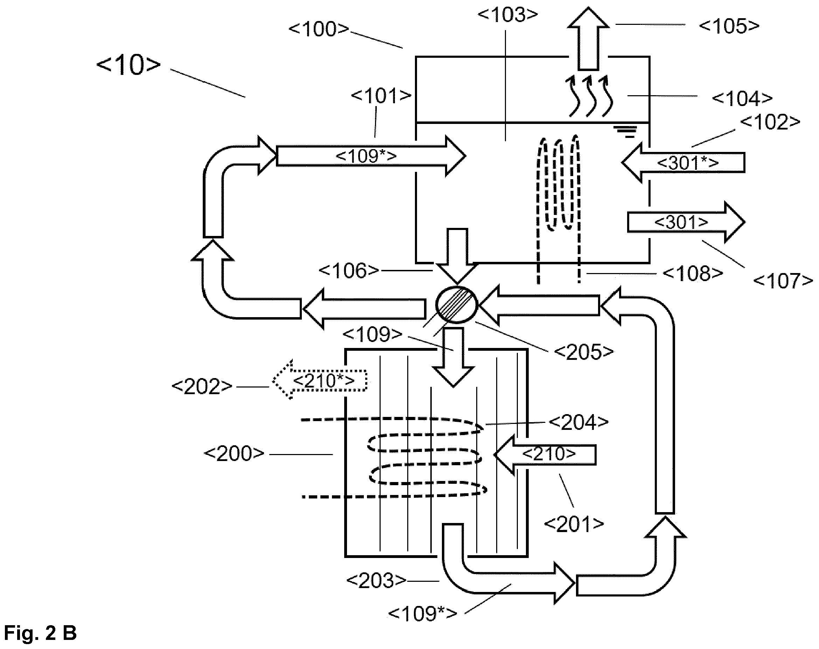

The setup of the water desorption unit $W_{des}$ <100> is based on the principle of supplying waste heat from power unit **PU** (not shown in Figure 1) to a liquid absorption medium $A_{VE}$* <109*> which is laden with water. "$A_{VE}$*" is used hereinafter to discern a liquid absorption medium which comprises the same components as $A_{VE}$ <109>, except that it has an elevated water content compared to the liquid absorption medium $A_{VE}$ <109>. $A_{VE}$ <109> is laden with water to obtain $A_{VE}$* <109*> in a water absorption unit $W_{abs}$ <200> (shown in Figures 2 A and 2 B).

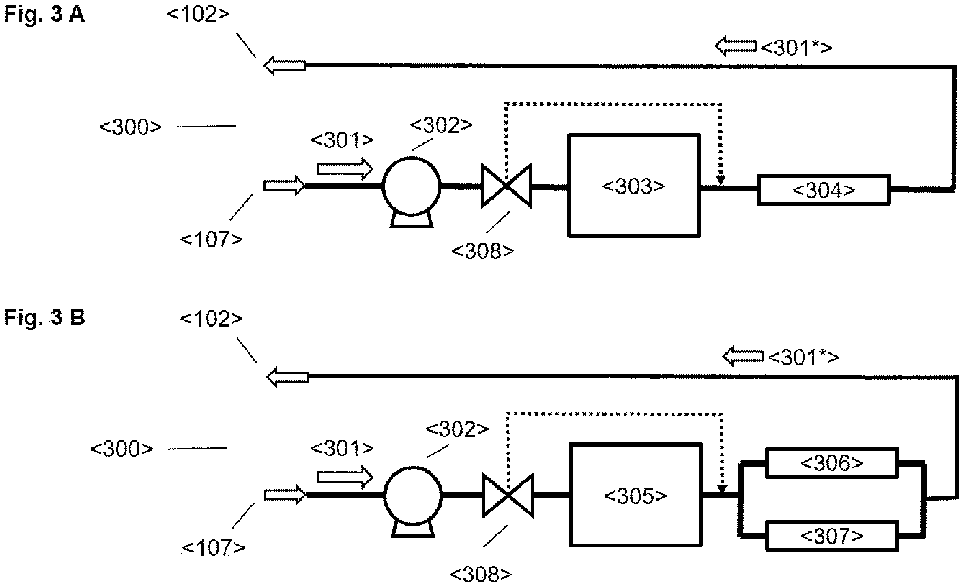

The water desorption unit $W_{des}$ <100> comprises a conduit <101> to feed liquid absorption medium $A_{VE}$* <109*> into the interior of the water desorption unit $W_{des}$ <100>. The water desorption unit $W_{des}$ <100> further comprises a conduit <102> to feed coolant **C*** <301*> into the interior of the water desorption unit $W_{des}$ <100>. "**C***" is used hereinafter to discern a coolant which comprises the same components as **C** <301>, except that it has an elevated heat content (and therefore an elevated temperature) compared to the coolant **C** <301>. **C** <301> is laden with heat to obtain **C*** <301*> by contacting a power unit **PU** such as a motor **M** <303> or a battery **B** <305> (shown in Figures 3 A and 3 B, respectively).

The water desorption unit $W_{des}$ <100> is set up to mix coolant **C*** <301*> conducted from the power unit **PU** and liquid absorption medium $A_{VE}$* <109*> conducted from the water absorption unit $W_{abs}$ <200> (shown in Figure 2) so to obtain water vapour $V_{H2O}$ <104> and a mixture $M_S$ <103>. This is usually achieved by ensuring that coolant **C*** <301*> has an elevated heat content compared to (i.e. a higher temperature than) $A_{VE}$* <109*>. Optionally, the desorbing of water vapour $V_{H2O}$ <104> from the mixture $M_S$ <103> can be supported by a heat exchanger <108>. Optionally, the desorbing of water vapour $V_{H2O}$ <104> from the mixture $M_S$ <103> can be supported by a means to reduce the pressure, such as a vacuum pump that reduces the pressure in the inside of the water desorption unit $W_{des}$ <100> (not shown in the Figures).

As the water vapour $V_{H2O}$ <104> is desorbed from the mixture $M_S$ <103>, the relative amount of water in the mixture $M_S$ <103> is less than the relative amount of water comprised by the mixture of coolant **C*** <301*> and liquid absorption medium $A_{VE}$* <109*> [namely, the amount of water comprised by coolant **C*** <301*> and liquid absorption medium $A_{VE}$* <109*> when mixed in the same weight ratio, when no water vapour $V_{H2O}$ <104> was desorbed from the mixture yet]. Preferably, as heat is used to desorb water vapour $V_{H2O}$ <104> from the mixture $M_S$ <103>, the relative amount of heat in the mixture $M_S$ <103> is less than the relative amount of heat comprised by the mixture of coolant **C*** <301*> and liquid absorption medium $A_{VE}$* <109*> [namely, the amount of heat comprised by coolant **C*** <301*> and liquid absorption medium $A_{VE}$* <109*> when mixed in the same weight ratio, when no heat was used to desorb water vapour $V_{H2O}$ <104> from the mixture yet].

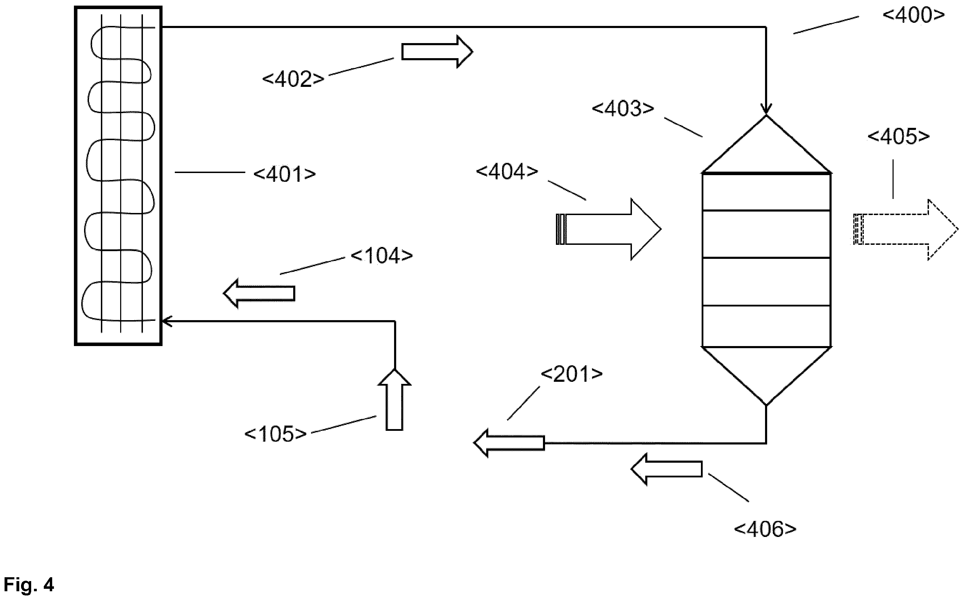

The water desorption unit $W_{des}$ <100> comprises a further conduit <105> by which water vapour $V_{H2O}$ <104> can be led off, for example to a water condenser <401> as shown in Figure 4.

The gist of the invention is now reflected in that the water desorption unit $W_{des}$ <100> is set up to mix coolant **C*** <301*>, obtained by contacting of coolant **C** <301> and the power unit **PU,** and liquid absorption medium $A_{VE}$* <109*>, obtained by contacting of liquid absorption medium $A_{VE}$ <109> and gas **G** in the the water absorption unit $W_{abs}$ <200>. This ensures optimal heat transfer and thus an ideal transfer of the waste heat from the power unit **PU** onto the liquid absorption medium $A_{VE}$* <109*>, so that a maximum amount of heat can be used to desorb water from the mixture $M_S$ <103>.

Water desorption unit $W_{des}$ <100> is further set up to conduct the mixture $M_s$ <103> which remains after desorption of water vapour $V_{H2O}$ <104> via two conduits <106> and <107>. Conduit <106> is set up to conduct mixture $M_S$ <103> to a water absorption unit $W_{abs}$ <200> (shown in Figure 2). The part of mixture $M_S$ <103> which is conducted via conduit <106> is denoted as "$A_{VE}$" <109> for the sake of simplicity. Conduit <107> is set up to conduct mixture $M_S$ <103> to the power unit **PU** such as a motor **M** <303> or a battery **B** <305> (shown in Figures 3 A and 3 B, respectively). The part of mixture $M_S$ <103> which is conducted via conduit <107> is denoted as **"C"** <301> for the sake of simplicity.

The interior of the water desorption unit $W_{des}$ <100> preferably contains further elements that favour water desorption from mixture $M_s$ <103>. For this purpose, any element that increases the surface area of mixture $M_s$ <103> and simultaneously achieves the longest possible residence time of the mixture $M_S$ <103> in the water desorption unit $W_{des}$ <100> can be used.

Employable water desorption units $W_{des}$ <100> optionally comprise a heat exchanger <108>, which either contacts the mixture $M_S$ <103> or not. It is preferable that the heat exchanger <108> contacts the mixture $M_S$ <103>, because then it supplies heat directly to the mixture $M_s$ <103>. Otherwise, the heat exchanger <108> can be set up to contact vapour $V_{H2O}$ <104>, which facilitates to drive out vapour $V_{H2O}$ <104> through conduit <105>. Likewise, in an optional embodiment of the present invention, a vacuum pump can be set up to reduce the pressure in the water desorption unit $W_{des}$ <100> in order to facilitate desorbing water vapour $V_{H2O}$ <104> from the mixture $M_s$ <103>.

The heat exchanger <108> can, alternatively, also be used, in particular at the end of the desorption, to cool the mixture $M_s$ <103>, so that the absorption efficiency of a first part of mixture $M_S$ <103> is improved when it is used as absorbent $A_{VE}$ <109> and furthermore the cooling efficiency of a second part of mixture $M_s$ <103> is improved when it is used as coolant **C** <301>.

Such arrangement includes in particular the combinations of heat exchanger and water desorber known to those skilled in the art, in particular horizontal tube evaporators having an upstream heat exchanger, in particular shell and tube heat exchangers, plate and frame heat exchangers. In addition, the water desorption unit $W_{des}$ optionally comprising a heat exchanger may also be a water desorber having an integrated heat exchanger. Such water desorbers having an integrated heat exchanger are in particular climbing film evaporators, long tube vertical evaporators, short tube vertical evaporators, forced circulation evaporators, agitated thin film evaporators. It is particularly preferable to employ as water desorption unit $W_{des}$ falling-films, in particular shell and tube falling-films.

### 4.1.1.4 Circuit $U_{WAC}$

WAC comprises a circuit $U_{WAC}$ which connects the at least one water absorption unit $W_{abs}$ with the at least one water desorption unit $W_{des}$, and by means of which the absorption media $A_{VE}$ and $A_{VE}^*$ may be circulated between the water absorption unit $W_{abs}$ and the water desorption unit $W_{des}$. In particular, this means that the liquid absorption medium $A_{VE}$ can be conducted from water desorption unit $W_{des}$ to the water absorption unit $W_{abs}$ and the liquid absorption medium $A_{VE}^*$ can be conducted from water absorption unit $W_{abs}$ to the water desorption unit $W_{des}$. The circuit $U_{WAC}$ is preferably a conduit, more preferably selected from the group consisting of tube, hose. In a further preferred embodiment, the circuit $U_{WAC}$ also comprises a pump.

In a preferred embodiment of a water desorption unit $W_{des}$ <100> as shown in Figure 1, the connection from water desorption unit $W_{des}$ <100> to the water absorption unit $W_{abs}$ <200> (shown in Figures 2 A and 2 B) starts from conduit <106>. Via this conduit <106>, mixture $M_S$ <103> can be conducted as $A_{VE}$ <109> to the water absorption unit $W_{abs}$ <200> where it absorbs further water from the moist gas G <210>, so to obtain $A_{VE}^*$ <109*> and gas G* <210*>. $A_{VE}^*$ <109*> is then conducted from the water absorption unit $W_{abs}$ <200> to water desorption unit $W_{des}$ <100> via conducts <203> and <101>.

Figure 2 A shows a first preferred embodiment of the water absorption unit component WAC <10> according to the first aspect of the invention. In this embodiment, the waste heat from the power unit PU is used to regenerate an absorbent which absorbs water from a moist gas G <210>, wherein the moist gas G <210> is not further limited, to give dehumidified gas G* <210*>. For example, moist gas G <210> can be moist air from the outside of the vehicle. Dehumidified air G* <210*> can then be supplied into the interior of the vehicle.

Figure 2 A depicts a water desorption unit $W_{des}$ <100> as shown by Figure 1. In addition, Figure 2 A also depicts a water absorption unit $W_{abs}$ <200>. Water absorption unit $W_{abs}$ <200> comprises a conduit <106> which is set up to conduct mixture $M_S$ <103>, which was obtained as explained with respect to Figure 1, to the interior of water absorption unit $W_{abs}$ <200>. Mixture $M_S$ <103> conducted via conduit <106> to the water absorption unit $W_{abs}$ <200> is referred to as "liquid absorption medium $A_{VE}$" <109>. Water absorption unit $W_{abs}$ <200> is further set up so that liquid absorption medium $A_{VE}$ <109> can be contacted with a moist gas G <210>. Water absorption unit $W_{abs}$ <200> is further set up so that moist gas G <210> can enter it via conduit <201> and so that the liquid absorption medium $A_{VE}$ <109> can absorb water from moist gas G <210>. Such absorption leaves a gas G* <210*>, which has a reduced water content compared to moist gas G, and liquid absorption medium $A_{VE}^*$ <109*> with an elevated water content compared to the liquid absorption medium $A_{VE}$ <109>. Water absorption unit $W_{abs}$ <200> is set up so that gas G* <210*> can be conducted out of the interior of water absorption unit $W_{abs}$ <200>, for example by a conduit <202>. Water absorption unit $W_{abs}$ <200> optionally contains a heat exchanger <204> which can be set up to cool liquid absorption medium $A_{VE}$ <109> so that the absorption of moisture from moist gas G <210> into liquid absorption medium $A_{VE}$ <109> is favoured. Water absorption unit $W_{abs}$ <200> further contains a conduit <203> which is set up to conduct liquid absorption medium $A_{VE}^*$ <109*> to water desorption unit $W_{des}$ <100>. Water desorption unit $W_{des}$ <100> comprises a conduit <101> to feed liquid absorption medium $A_{VE}^*$ <109*> into the interior of the water desorption unit $W_{des}$ <100> as described with respect to Figure 1.

Figure 2 B depicts the same embodiment as Figure 2 A, except that it further contains a heat exchanger <205>. This embodiment is more efficient, because heat exchanger <205> allows to exchange heat between liquid absorption medium $A_{VE}^*$ <109*> which is conducted from water absorption unit $W_{abs}$ <200> via conduit <203> to the water desorption unit $W_{des}$ <100> and liquid absorption medium $A_{VE}$ <109> which is conducted from water desorption unit $W_{des}$ <100> via conduit <106> to the water absorption unit $W_{abs}$ <200>.

### 4.1.2 Power Unit Component PUC

The vehicle according to the first aspect of the invention comprises at least one power unit component PUC.

### 4.1.2.1 Coolant C

PUC comprises a coolant C. C comprises at least one salt S. It reflects the gist of the invention that the at least one salt S comprised by C is the same at least one salt that is comprised by the liquid absorption medium $A_{VE}$. Therefore, the same salts **S** and the preferred embodiments as described for $A_{VE}$ under item 4.1.1.1 *supra* apply to **C**.

4.1.2.2 Power Unit **PU**

**PUC** comprises at least one power unit **PU.**

The power unit **PU** can be any means by which the vehicle can be powered and by which waste heat is generated. It is preferably selected from the group consisting of a motor **M**, battery **B**. The power unit **PU** can also be a hybrid technology engine, thus comprising at least one battery **B** and at least one motor **M.**

**PU** is set up to transfer heat from the **PU** onto the coolant **C.** Such setup is known to the skilled person. For example, the heat can be transferred from the **PU** onto **C** by directly contacting the outer surface of **PU** with **C.** For example, such setup is depicted in WO 2010/088978 A1 or in P. Sharma, M. Parwal, E. Ayyar, SAE Technical Paper 2018-28-0013, 2018 (DOI: 10.4271/2018-28-0013).

Alternatively, in case of a power unit running on petrol, diesel, or another fossil combustible material, for example fuel oil, the heat from the motor can also be transferred onto the coolant **C** by contacting **C** with the exhaust fumes of the motor. For example, such use of the heat from the exhaust fumes is depicted in US 2006/0130469 A1.

4.1.2.3 Circuit $U_{PUC}$

**PUC** comprises a circuit $U_{PUC}$. $U_{PUC}$ connects the at least one power unit **PU** with the at least one water desorption unit $W_{des}$. By means of $U_{PUC}$, the coolants **C** and **C*** may be circulated between the at least one power unit **PU** and the at least one water desorption unit $W_{des}$. In particular, this means that the coolant **C** can be conducted from water desorption unit $W_{des}$ to the power unit and the coolant **C*** can be conducted from the power unit to the water desorption unit $W_{des}$.

In a preferred embodiment of a water desorption unit $W_{des}$ <100> as shown in Figures 1, 2 A, and 2 B, the connection from water desorption unit $W_{des}$ <100> to the power unit **PU** is from conduit <107>. Via this conduit <107>, mixture $M_S$ <103> can be conducted as **C** <301> to power unit **PU** where it absorbs further heat from the power unit **PU,** so to obtain **C*** <301*>. **C*** <301*> is then conducted from the power unit **PU** to water desorption unit $W_{des}$ <100> via conduct <102>.

Figures 3 A und 3 B show further preferred embodiments of the invention and show preferred configurations of the power unit component **PUC** <300>. They show simplified versions of a power unit component **PUC** <300> that can be found in a vehicle containing a motor **M** <303> (Figure 3 A) or a battery **B** <305> (Figure 3 B).

In the power unit component **PUC** <300> according to Figure 3 A, **PUC** <300> is set up so that the coolant **C** <301> enters the power unit component **PUC** <300> through conduit <107> from the water desorption unit $W_{des}$ <100> (shown in Figures 1, 2 A, and 2 B). The coolant **C** <301> is pumped through the system by an electric liquid pump <302>. The arrows indicate the flow of the coolant **C** <301>. In Figure 3 A, the coolant **C** <301> passes a three-way valve <308> and is pumped to a motor **M** <303>. Here, it takes up heat and for the sake of simplicity is now denoted as **C*** <301*>. Optionally, **C*** <301*> passes an invertor <304>. The invertor <304> is only an optional embodiment and can be omitted. The coolant **C*** <301*> then is pumped through conduit <102> to the water desorption unit $W_{des}$ <100>, where it is mixed with liquid absorption medium $A_{VE}$* <109*> to provide $V_{H2O}$ and mixture $M_S$ (not shown in Figure 3 A). $M_S$ can then again enter the power unit component **PUC** <300> as coolant **C** <301> through conduit <107>. In a preferred embodiment, the **PUC** <300> also contains a conduit for the idle state (indicated by the dashed line), in case no heat removal from the motor **M** <303> is necessary, so that coolant **C** <301> can bypass the motor **M** <303>. Then, the three-way valve <308> is oriented so the coolant **C** <301> does not contact the motor **M** <303>.

In Figure 3 B, a system containing a battery **B** <305> is shown. **PUC** <300> is set up so that the coolant **C** <301> enters the power unit component **PUC** <300> through conduit <107> from the water desorption unit $W_{des}$ <100> (shown in Figures 1, 2 A, and 2 B). The coolant **C** <301> is pumped through the system by an electric liquid pump <302>. The arrows indicate the flow of the coolant **C** <301>. In Figure 3 B, the coolant **C** <301> passes a three-way valve <308> and is pumped to a battery **B** <305>. Here it takes up heat and for the sake of simplicity is now denoted as **C*** <301*> and thereafter optionally passes battery charger <306> or a DC-DC convertor <307>. The battery charger <306> and the DC-DC convertor <307> are only optional embodiments and can be omitted. The coolant **C*** <301*> then is pumped through conduit <102> to the water desorption unit $W_{des}$ <100>, where it is mixed with liquid absorption medium $A_{VE}$* <109*> to provide $V_{H2O}$ and mixture $M_S$ (not shown in Figure 3 B). $M_S$ <103> can then again enter the power unit component **PUC** as coolant **C** <301> through conduit <107>. In a preferred embodiment, the **PUC** also contains a conduit for the idle state (indicated by the dashed line) in case no heat removal from the battery **B** <305> is necessary so that coolant **C** can bypass the battery **B** <305>. Then, the three-way valve <308> is oriented so the coolant **C** <301> does not contact the battery **B** <305>.

### 4.1.3 Preferred Embodiment

In a further preferred embodiment, the vehicle further comprises at least one cooling component **WIC** for cooling air from inside the vehicle or for cooling a component $O_B$ of the vehicle, wherein $O_B$ is different from the power unit **PU.** It goes without saying that **WIC** can also be used for cooling both air from inside the vehicle and a component $O_B$. **WIC** is preferably an absorption refrigeration machine.

### 4.1.3.1 Refrigerant

**WIC** comprises water as a refrigerant. The use of water as refrigerant further reflects the gist of the invention in that the water in the form of moist gas **G** is absorbed into the liquid absorption medium $A_{VE}$ in the water absorption unit $W_{abs}$ and then conducted as part of liquid absorption medium $A_{VE}*$ to the water desorption unit $W_{des}$. The water desorption unit $W_{des}$ is set up so that this water is at least partly stripped from the mixture of liquid absorption medium $A_{VE}*$ and coolant C*, giving water vapour $V_{H2O}$ and $M_S$. Then water vapour $V_{H2O}$ is conducted to a water condenser $W_{Con}$.

### 4.1.3.2 Water Condenser $WC_{on}$

**WIC** further comprises at least one water condenser $W_{Con}$ set up for at least partially condensing water vapour $V_{H2O}$ into liquid water $L_{H2O}$. Such water condensers are known to the skilled person, and are for example described by M. Seiler, A. Kühn, F. Ziegler, X. Wang, Sustainable Cooling Strategies Using New Chemical System Solutions, Ind. Eng. Chem. Res. 2013, 52, 16519-16546 (hereinafter "Seiler *et al.*"). The water condenser $W_{Con}$ is set up to at least partially condense water vapour $V_{H2O}$, so to obtain liquid water $L_{H2O}$.

### 4.1.3.3 Water Evaporator $W_{Ev}$

**WIC** further comprises at least one water evaporator $W_{Ev}$, set up for at least partially evaporating water, so to obtain water vapour $V_{H2O}*$. These water evaporators are known to the skilled person, and are for example described in Seiler *et al.*

The water evaporator $W_{Ev}$ in particular comprises a surface, which is preferably made from metal, wherein the metal is more preferably selected from a noble metal, aluminium, steel, copper, nickel, zinc, tin or alloys from any of them. Noble metals are preferably selected from silver, gold, platinum. Steal is preferably selected from carbon steel, stainless steel.

The metal is even more preferably selected from aluminium, copper, steel.

The surface preferably contacts air from inside the vehicle or a it contacts a component $O_B$ of the vehicle, wherein $O_B$ is different from the power unit **PU,** so that heat from the air or $O_B$ can be transferred to water inside the water evaporator $W_{Ev}$ to at least partially evaporate water to obtain water vapour $V_{H2O}*$,

This water evaporator $W_{Ev}$ represents the cooling component of the absorption refrigeration cycle.

This water evaporator $W_{Ev}$, in an optional embodiment of the present invention, can comprise a vacuum pump set up to reduce the pressure in the water evaporator $W_{Ev}$ in order to facilitate evaporation of liquid water $L_{H2O}$ to give water vapour $V_{H2O}*$.

$O_B$ is different from the power unit **PU,** and preferably $O_B$ is a component in the passenger area of the vehicle, such as a computer server or furnishings within the vehicle.

"Air from inside the vehicle" preferably refers to air from the passenger area of the vehicle.

"Passenger area" refers to areas where passengers usually are located during the operation of the vehicle. It also refers to the area where ridership, drivers, conductors, pilots, captains are seated during operation of the vehicle.

### 4.1.3.4 Conduit $U_{WIC}$

**WIC** further comprises a conduit $U_{WIC}$ which connects the at least one water desorption unit $W_{des}$ with the at least one water condenser $W_{Con}$, the at least one water condenser $W_{Con}$ with the at least one water evaporator $W_{Ev}$, and the at least one water evaporator $W_{Ev}$ with the at least one water absorption unit $W_{abs}$, and by means of which water vapour $V_{H2O}$ may be conducted from the at least one water desorption unit $W_{des}$ to the at least one water condenser $W_{Con}$, and by means of which liquid water $L_{H2O}$ may be conducted from the at least one water condenser $W_{Con}$ to the at least one water evaporator $W_{Ev}$, and by means of which water vapour $V_{H2O}*$ may be conducted from the at least one water evaporator $W_{Ev}$ as moist gas **G** to the at least one water absorption unit $W_{abs}$.

Figure 4 shows a further preferred embodiment of the vehicle according to the first aspect of the invention. In this embodiment, a preferred embodiment of the cooling component **WIC** <400> is shown. In this embodiment, water vapour $V_{H2O}$ <104> is conducted from the water desorption unit $W_{des}$ <100> (shown in Figures 1, 2 A, and 2 B) via conduit <105> to a water condenser $W_{Con}$ <401> which is set up to condense water vapour $V_{H2O}$ <104> into liquid water $L_{H2O}$ <402>. Liquid water $L_{H2O}$ <402> is then conducted to water evaporator $W_{Ev}$, <403> set up for evaporating water, so to obtain water vapour $V_{H2O}$* <406>. The water evaporator $W_{Ev}$ <403> comprises a surface, which is preferably made from metal. The surface contacts air from inside the vehicle <404> and is set up to transfer the heat from air <404> to the liquid water $L_{H2O}$ <402> to evaporate liquid water $L_{H2O}$ <402> to obtain water vapour $V_{H2O}$* <406>, leaving air <405> with a reduced temperature.

The surface can also contact an object $O_B$ different from the power unit **PU,** for example from inside the passenger area of the vehicle and is set up to transfer the heat from $O_B$ to the liquid water $L_{H2O}$ <402> to evaporate liquid water $L_{H2O}$ <402> to obtain water vapour $V_{H2O}$* <406>.

Water vapour $V_{H2O}$* <406> is then conducted to the water absorption unit $W_{abs}$ <200> (shown in Figures 2 A and 2 B) as moist gas **G** <210> and can enter water absorption unit $W_{abs}$ <200> through conduit <201>.

In such an embodiment, moisture from moist gas **G** <210> is constantly absorbed into absorbent $A_{VE}$ <109>, so that a separate conduct <202> is not necessary.

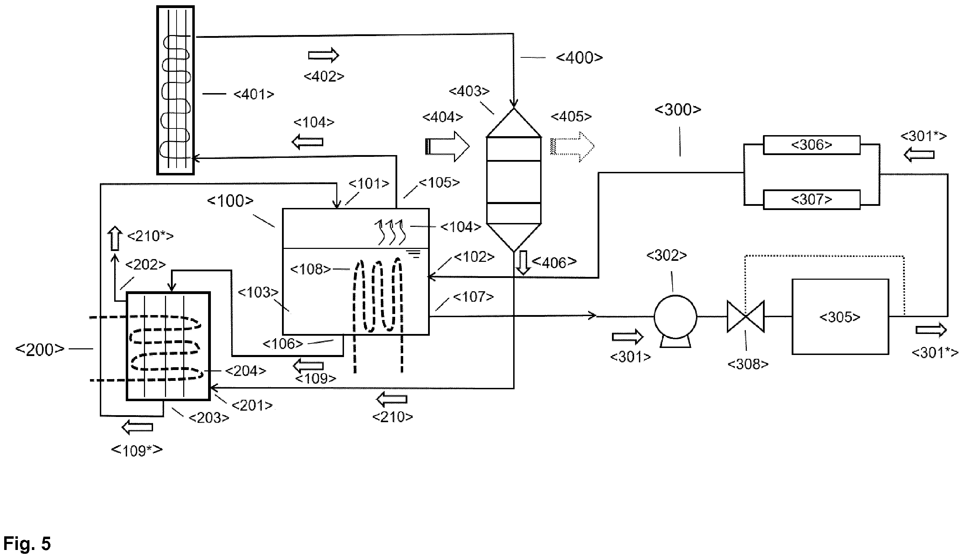

Figure 5 shows a further embodiment of a vehicle according to the first aspect of the invention. It comprises a water desorption unit $W_{des}$ <100> as explained under item 4.1.1.3 and Figure 1 in combination with a water absorption unit $W_{abs}$ <200> as explained under item 4.1.1.2 and Figure 2 A, a power unit component **PUC** <300> as explained under item 4.1.2 and Figure 3 B in combination with a cooling component **WIC** <400> as explained under item 4.1.3 and Figure 4. The reference numerals given in Figure 5 correspond to those explained in the above Figures and the respective passage.

4.2 Process

The process according to the second aspect of the present invention is one for combined cooling of a power unit **PU,** and absorbing water from a moist gas **G** in a vehicle, comprising the following steps:

(a) contacting a moist gas **G** with a liquid absorption medium $A_{VE}$, to obtain a liquid absorption medium $A_{VE}$* with an elevated water content compared to the liquid absorption medium $A_{VE}$, and a gas **G*** with a reduced water content compared to the moist gas **G,**

(b) contacting a coolant **C** with a power unit **PU,** so that heat is transferred from the power unit **PU** to the coolant **C,** to obtain a coolant **C*** with an elevated heat content as compared to coolant **C,**

(c) at least partially desorbing water by mixing coolant **C*** with liquid absorption medium $A_{VE}$* so to obtain water vapour $V_{H2O}$ and a mixture $M_S$, wherein the mixture $M_S$ comprises the at least one salt **S** comprised by the coolant **C** and the liquid absorption medium $A_{VE}$, and wherein the relative amount of water comprised by the mixture $M_S$ is less than the relative amount of water comprised by the mixture of coolant **C*** and liquid absorption medium $A_{VE}$*,

wherein the coolant C and the liquid absorption medium $A_{VE}$ comprise the same at least one salt **S** selected from the group consisting of $Q^+A^-$, $Q^+(R^1O)_2PO_2^-$, $(Q^+)_2R^2OPO_3^{2-}$, $Q^+M^+R^3OPO_3^{2-}$,
wherein $Q^+$ is a dialkylimidazolium cation,
wherein $A^-$ is an anion selected from the group consisting of halogenide, $R^*COO^-$, $R'SO_3^-$, $HSO_4^-$, $R''SO_4^-$, $HCOO$ ,
wherein $R^*$, $R'$, $R''$ are each independently of one another an alkyl group,
wherein $R^1$, $R^2$, $R^3$ are each independently of one another an alkyl group,
and wherein $M^+$ is an alkali metal ion.

A vehicle according to the invention is preferably selected from the group consisting of car, motorbike, plane, helicopter, ship, train, tram. Preferably, the vehicle according to the present invention is a car.

4.2.1 Step (a): Wate Absorption

Step (a) of the process according to the second aspect of the invention comprises contacting a moist gas **G** with a liquid absorption medium $A_{VE}$. In step (a), the liquid absorption medium $A_{VE}$ absorbs water from the moist gas **G,** and a liquid absorption medium $A_{VE}$* with an elevated water content compared to the liquid absorption medium $A_{VE}$, and a gas **G*** with a reduced water content compared to the moist gas **G** are obtained.

$A_{VE}$ comprises at least one salt **S** selected from the group consisting of $Q^+A^-$, $Q^+(R^1O)_2PO_2^-$, $(Q^+)_2R^2OPO_3^{2-}$, $Q^+M^+R^3OPO_3^{2-}$,
wherein $Q^+$ is a dialkylimidazolium cation,
wherein $A^-$ is an anion selected from the group consisting of halogenide, $R^*COO^-$, $R'SO_3^-$, $HSO_4^-$, $R''SO_4^-$, $HCOO$ ,
wherein $R^*$, $R'$, $R''$ are each independently of one another an alkyl group,

wherein $R^1$, $R^2$, $R^3$ are each independently of one another an alkyl group,
and wherein $M^+$ is an alkali metal ion.

**S** is preferably selected from the group consisting of $Q^+A^-$, $Q^+(R^1O)_2PO_2^-$. Most preferably, **S** is $Q^+(R^1O)_2PO_2^-$.

The halogenide is selected from the group consisting of $F^-$, $Cl^-$, $Br^-$, $I^-$, preferably from the group consisting of $F^-$, $Cl^-$, $Br^-$, more preferably from the group consisting of $Cl^-$, $Br^-$. Most preferably, the halogenide is $Cl^-$.

The alkali metal ion is preferably selected from the group consisting of $Li^+$, $K^+$, $Na^+$, more preferably $K^+$, $Na^+$, most preferably $Na^+$.

$Q^+$ is a dialkylimidazolium cation, in which in particular the alkyl groups each independently have 1 to 10, preferably 1 to 8, more preferably 1 to 6, still more preferably 1 to 4, even more preferably 1 to 2 carbon atoms. Preferably dialkylimidazolium cations are selected from 1,3-dimethylimidazolium, 1,3-diethylimidazolium, 1-ethyl-3-methylimidazolium, 1-butyl-3-methylimidazolium, more preferably 1,3-dimethylimidazolium, 1-ethyl-3-methylimidazolium, most preferably 1-ethyl-3-methylimidazolium.

A is preferably selected from the group consisting of halogenide, $R^*COO^-$, $R'SO_3^-$, more preferably A is selected from the group consisting of acetate, proprionate, chloride, methyl sulphonate.

$R^*$, $R'$, $R''$ are each independently of one another an alkyl group, in particular with 1 to 10, preferably 1 to 8, more preferably 1 to 6, still more preferably 1 to 4, even more preferably 1 to 3, most preferably 1 to 2 carbon atoms, most preferably 1 carbon atom.

$R^1$, $R^2$, $R^3$ are each independently of one another an alkyl group, in particular with 1 to 10, preferably 1 to 8, more preferably 1 to 6, still more preferably 1 to 4, even more preferably 1 to 2 carbon atoms, most preferably 2 carbon atoms.

In a preferred embodiment of the first aspect of the invention, **S** is selected from the group consisting of $Q^+A^-$, $Q^+(R^1O)_2PO_2^-$, wherein preferably $Q^+$ is selected from the group consisting of 1,3-dimethylimidazolium, 1,3-diethylimidazolium, 1-ethyl-3-methylimidazolium, A is selected from the group consisting of $Cl^-$, acetate, proprionate, methyl sulphonate, and $R^1$ is an alkyl group with 1 to 10, preferably 1 to 8, more preferably 1 to 6, still more preferably 1 to 4, even more preferably 1 to 2 carbon atoms, most preferably 2 carbon atoms.

Even more preferably, **S** is selected from the group comprising 1,3-dimethylimidazolium chloride, 1-ethyl-3-methylimidazolium chloride, 1,3-dimethylimidazolium acetate, 1,3-dimethylimidazolium propionate, 1,3-dimethylimidazolium methyl sulphonate, 1,3-dimethylimidazolium monoethylphosphate, 1,3-dimethylimidazolium diethylphosphate, 1-ethyl-3-methylimidazolium diethylphosphate, 1-butyl-3-methylimidazolium dibutylphosphate, even more preferably selected from the group comprising 1,3-dimethylimidazolium acetate, 1,3-dimethylimidazolium propionate, 1,3-dimethylimidazolium methyl sulphonate, 1,3-dimethylimidazolium diethylphosphate, 1-ethyl-3-methylimidazolium diethylphosphate, 1-butyl-3-methylimidazolium dibutylphosphate,

In another preferred embodiment of the first aspect of the invention, **S** is $Q^+(R^1O)_2PO_2^-$, wherein preferably $Q^+$ is selected from the group consisting of 1,3-dimethylimidazolium, 1,3-diethylimidazolium, 1-ethyl-3-methylimidazolium, 1-butyl-3-methylimidazolium, more preferably selected from the group consisting of 1,3-dimethylimidazolium, 1-ethyl-3-methylimidazolium, 1-butyl-3-methylimidazolium, more preferably selected from the group consisting of 1,3-dimethylimidazolium, 1-ethyl-3-methylimidazolium, most preferably 1-ethyl-3-methylimidazolium,

and $R^1$ is an alkyl group with 1 to 10, preferably 1 to 8, more preferably 1 to 6, still more preferably 1 to 4, even more preferably 1 to 2 carbon atoms, most preferably 2 carbon atoms.

**S** is most preferably 1-ethyl-3-methylimidazolium diethylphosphate.

The liquid absorption medium $A_{VE}$ may be employed in step (a) in the form of the pure salts of the structure $Q^+A^-$, $Q^+(R^1O)_2PO_2^-$, $(Q^+)_2R^2OPO_3^{2-}$, $Q^+M^+R^3OPO_3^{2-}$. Alternatively and preferably the liquid absorption medium $A_{VE}$ in step (a) is an aqueous solution in which the total weight of all salts of structure $Q^+A^-$, $Q^+(R^1O)_2PO_2^-$, $(Q^+)_2R^2OPO_3^{2-}$, $Q^+M^+R^3OPO_3^{2-}$ is at least 65 weight-% based on the total weight of the aqueous solution. It is more preferable when in the liquid absorption medium $A_{VE}$ the total weight of all salts of the structure $Q^+A^-$, $Q^+(R^1O)_2PO_2^-$, $(Q^+)_2R^2OPO_3^{2-}$, $Q^+M^+R^3OPO_3^{2-}$ is in the range of 65 to 99 weight-% based on the total weight of the aqueous solution. It is even more preferable when in the liquid absorption medium $A_{VE}$ the total weight of all salts of the structure $Q^+A^-$, $Q^+(R^1O)_2PO_2^-$, $(Q^+)_2R^2OPO_3^{2-}$, $Q^+M^+R^3OPO_3^{2-}$ is in the range of 65 to 90 weight-% based on the total weight of the aqueous solution. It is most preferable when in the liquid absorption medium $A_{VE}$ the total weight of all salts of the structure $Q^+A^-$, $Q^+(R^1O)_2PO_2^-$, $(Q^+)_2R^2OPO_3^{2-}$, $Q^+M^+R^3OPO_3^{2-}$ is in the range of 65 to 80 weight-%, even more preferable 70 to 80 weight-%, based on the total weight of the aqueous solution.

In the process according to the invention, the liquid absorption medium $A_{VE}$ preferably has a temperature in the range of 1 °C to < 100 °C, preferably 10 °C to 80 °C, more preferably 15 °C to 45 °C, even more preferably 20 °C to 30 °C.

The moist gas **G** used in the process according to the second aspect of the invention has in particular a temperature of 2°C to 100°C, preferably 3°C to 60°C, more preferably 4°C to 50°C, even more preferably 5°C to 40°C and is otherwise not subject to any particular restrictions.

The contacting may be effected in any way known to those skilled in the art, in particular in a water absorption unit $W_{abs1}$ <200> (elucidated above and in Figures 2 A and 2 B). The contacting causes the liquid absorption medium

$A_{VE}$ to at least partially absorb moisture, i.e. water, from the moist gas **G.**

After step (a), a liquid absorption medium $A_{VE}$* and a gas **G*** are obtained. $A_{VE}$* corresponds to $A_{VE}$ and has an elevated water content compared to $A_{VE}$, which is the reason why $A_{VE}$* is "aqueous". Of note, the fact that $A_{VE}$* is "aqueous" does not mean that $A_{VE}$ cannot contain water. In some embodiments of the invention, $A_{VE}$ is also "aqueous".

The water content of $A_{VE}$* is preferably at least 1 weight-% higher that that of $A_{VE}$, more preferably at least 2 weight-% higher than that of $A_{VE}$, more preferably at least 3 weight-% higher than that of $A_{VE}$, more preferably at least 4 weight-% higher than that of $A_{VE}$, more preferably at least 5 weight-% higher than that of $A_{VE}$, more preferably at least 6 weight-% higher than that of $A_{VE}$, more preferably at least 7 weight-% higher than that of $A_{VE}$, more preferably at least 8 weight-% higher than that of $A_{VE}$, more preferably at least 9 weight-% higher than that of $A_{VE}$, more preferably at least 10 weight-% higher than that of $A_{VE}$.

These preferred embodiments also include the further preferable case in which the water content of $A_{VE}$* is in the range of 1 to 10 weight-% higher than that of $A_{VE}$, and likewise include the two preferred cases in which the water content of $A_{VE}$* is in the range of 1 to 5 weight-% higher than that of $A_{VE}$ or in which the water content of $A_{VE}$* is in the range of 2 to 10 weight-% higher than that of $A_{VE}$.

**G*** corresponds to **G** and has a reduced water content compared to the moist gas **G,** preferably reduced by at least 10 weight-%, more preferably reduced by at least 20 weight-%, more preferably reduced by at least 30 weight-%, more preferably reduced by at least 40 weight-%, more preferably reduced by at least 50 weight-%, more preferably reduced by at least 60 weight-%, more preferably reduced by at least 70 weight-%, more preferably reduced by at least 80 weight-%, more preferably reduced by at least 90 weight-%, more preferably reduced by at least 95 weight-%, more preferably reduced by at least 99 weight-%, compared to **G.**

The liquid absorption medium $A_{VE}$*, due to the absorption heat when moisture is absorbed into $A_{VE}$, may have a temperature that is higher than that of $A_{VE}$.

4.2.2 Step (b): Cooling of the power unit **PU**

Step (b) of the process according to the second aspect of the invention comprises contacting a coolant **C** with a power unit **PU,** so that heat is transferred from the power unit **PU** to the coolant **C,** to obtain a coolant **C*** with an elevated heat content as compared to coolant **C.**

Step (b) is preferably carried out in a power unit component **PUC** <300> as shown in Figures 3 A and 3 B.

Coolant **C** comprises the same at least one salt **S** as $A_{VE}$. Coolant **C** preferably has a temperature in the range of 1 °C to < 100 °C, preferably 10 °C to 80 °C, more preferably 15 °C to 45 °C, even more preferably 20 °C to 30 °C.

The power unit **PU** can be any means by which the vehicle can be powered and by which waste heat is generated. It is preferably selected from the group consisting of a motor **M,** battery **B.** The power unit **PU** can also be a hybrid technology engine, thus comprising at least one battery **B** and at least one motor **M.**

The contacting of the coolant **C** with the power unit **PU,** so that heat is transferred from the power unit **PU** to the coolant **C** to obtain coolant **C***, can be effected by methods known to the person skilled in the art. For example, such setup is depicted in WO 2010/088978 A1 or in P. Sharma, M. Parwal, E. Ayyar, SAE Technical Paper 2018-28-0013, 2018 (DOI: 10.4271/2018-28-0013).

Alternatively, in case of a power unit **PU** running on petrol, diesel, or another fossil combustible material, for example fuel oil, the heat from the motor **M** can also be transferred onto the coolant **C** by contacting **C** with the exhaust fumes of the motor **M.** For example, such use of the heat from the exhaust fumes is depicted in US 2006/0130469 A1.

After step (b), a coolant **C*** is obtained. Coolant **C*** corresponds to coolant **C** and has an elevated temperature compared to coolant **C.** It is preferable that after step (b), coolant **C*** has a temperature in the range of 10 °C to 120 °C, because such temperature is necessary and sufficient to drive out water vapour $V_{H2O}$ from liquid absorption medium $A_{VE}$* in the following step (c) of the process according to the second aspect of the invention. Even more preferably, after step (b), **C*** has a temperature of 40 °C to < 100 °C, more preferably 40 °C to 90 °C, even more preferably 50 °C to 80 °C.

The temperature of **C*** can for example be controlled by the skilled person by controlling the amount of heat transferred from **PU** onto **C.** This in turn can be controlled by controlling the amount of time that **C** contacts **PU.**

4.2.3 Step (c): Mixing $A_{VE}$* and **C*** and desorbing

Step (c) of the process according to the second aspect of the invention comprises at least partially desorbing water by mixing coolant **C*** with liquid absorption medium $A_{VE}$* so to obtain water vapour $V_{H2O}$ and a mixture $M_S$, wherein the mixture $M_S$ comprises the at least one salt **S** comprised by the coolant **C** and the liquid absorption medium $A_{VE}$, and wherein the relative amount of water comprised by the mixture $M_S$ is less than the relative amount of water comprised by the mixture of coolant **C*** and liquid absorption medium $A_{VE}$*. "Desorbing water" in the context of the invention means at least partially desorbing water.

"Wherein the relative amount of water comprised by the mixture $M_S$ is less than the relative amount of water comprised by the mixture of coolant $C^*$ and liquid absorption medium $A_{VE}^*$" means that the water content in a given amount of the mixture $M_S$, is less than the water content in the same amount (by weight) of a mixture of coolant $C^*$ and liquid absorption medium $A_{VE}^*$, when mixed in the same weight ratio as for mixture $M_S$, but when no water vapour $V_{H2O}$ was desorbed from it yet.

"Wherein the relative amount of heat comprised by the mixture $M_S$ is less than the relative amount of heat comprised by the mixture of coolant $C^*$ and liquid absorption medium $A_{VE}^*$" means that the heat content in a given amount of the mixture $M_S$, is less than the heat content in the same amount (by weight) of a mixture of coolant $C^*$ and liquid absorption medium $A_{VE}^*$, when mixed in the same weight ratio as for mixture $M_S$, but when no heat in it was used yet to desorb water vapour $V_{H2O}$.

This theoretical amount of heat or water, respectively, in a mixture of coolant $C^*$ and liquid absorption medium $A_{VE}^*$ (when no heat in it was used / not water vapour $V_{H2O}$ was desorbed from it yet) in any ratio (by weight) can easily be determined by determining the respective amount of water/heat in coolant $C^*$ and liquid absorption medium $A_{VE}^*$, separately, and then calculating how much water or heat, the respective theoretical mixture when mixed in the same weight ratio as for mixture $M_S$, would contain.

In praxis, mixing of coolant $C^*$ with liquid absorption medium $A_{VE}^*$ will cause water vapour $V_{H2O}$ to be desorbed and thus directly results in a mixture $M_S$ and water vapour $V_{H2O}$. Water vapour $V_{H2O}$ is obtained by mixing coolant $C^*$ with liquid absorption medium $A_{VE}^*$ in ratio so that the temperature of the resulting mixture $M_S$ has a temperature which is raised, causing water vapour $V_{H2O}$ to be desorbed from mixture $M_S$, so that water vapour $V_{H2O}$ is obtained. The skilled person knows in which ratio, depending on the specific temperature of coolant $C^*$ with liquid absorption medium $A_{VE}^*$, he or she has to mix these two so that the temperature of the resulting mixture $M_S$ is sufficient to desorb water vapour $V_{H2O}$ from mixture $M_S$. In step (c) of the process according to the second aspect of the invention, coolant $C^*$ and liquid absorption medium $A_{VE}^*$ are preferably mixed in a weight ratio of $C^*$ *(wt.)* : $A_{VE}^*$ *(wt.)* = 9 : 1 to 1 : 9, more preferably $C^*$ *(wt.)* : $A_{VE}^*$ *(wt.)* = 4 : 1 to 1 : 4, more preferably $C^*$ *(wt.)* : $A_{VE}^*$ *(wt.)* = 7 : 3 to 3 : 7, more preferably $C^*$ *(wt.)* : $A_{VE}^*$ *(wt.)* = 3 : 2 to 2 : 3, most preferably $C^*$ *(wt.)* : $A_{VE}^*$ *(wt.)* = 1 : 1.

In a preferred embodiment, **C** is loaded with heat from the power unit **PU** so that the temperature of **C*** is higher than that of $A_{VE}^*$.

It is preferable that the process according to the second aspect of the invention is controlled so that the temperature of $A_{VE}^*$ is lower than the temperature of $C^*$ by at least 1 °C, more preferably at least 2 °C, more preferably at least 3 °C, more preferably at least 4 °C, more preferably at least 5 °C, more preferably at least 6 °C, more preferably at least 10 °C, more preferably at least 11 °C, more preferably at least 12 °C, more preferably at least 15 °C, more preferably at least 17 °C, more preferably at least 20 °C, more preferably at least 25 °C, more preferably at least 30 °C.

The temperature of $A_{VE}^*$ can for example be controlled by the skilled person by controlling the absorption of water into $A_{VE}$ in step (a) of the process according to the second aspect of the invention, as this absorption due to the absorptions heat elevates the temperature of $A_{VE}$. In addition, the temperature of $A_{VE}$ can be elevated (or reduced) by a heat exchanger during step (a) of the process according to the second aspect of the invention.

This includes the preferable cases in which the process according to the second aspect of the invention is controlled so that the temperature of $A_{VE}^*$ is lower than the temperature of $C^*$ by a temperature difference in the range of 1 °C to 30 °C, more preferably in the range of 2 °C to 25 °C, more preferably in the range of 3 °C to 20 °C, more preferably in the range of 4 °C to 17 °C, more preferably in the range of 5 °C to 15 °C, more preferably in the range of 6 °C to 12 °C, more preferably in the range of 10 °C to 11 °C.

Preferably, in step (c), vapour $V_{H2O}$ is desorbed from $M_S$ until $M_S$ has a temperature which is at least 1 °C, preferably at least 2 °C, more preferably at least 3 °C, more preferably at least 4 °C, more preferably at least 5 °C, more preferably at least 6 °C, more preferably at least 7 °C, more preferably at least 8 °C, more preferably at least 9 °C, more preferably at least 10 °C lower than the temperature $T_{Mix}$ of the mixture of $C^*$ and $A_{VE}^*$ directly after mixing. $T_{Mix}$ is calculated by

$$T_{Mix} = (m_{C^*} \cdot C_{C^*} \cdot T_{C^*} + m_{AVE^*} \cdot C_{AVE^*} \cdot T_{AVE^*}) / (m_{C^*} \cdot C_{C^*} + m_{AVE^*} \cdot C_{AVE^*}).$$

$T_{C^*}$ and $T_{AVE^*}$ are the temperatures of $C^*$ and $A_{VE}^*$, respectively, in the moment that they are mixed to give $M_S$.

$m_{C^*}$ and $m_{AVE^*}$ are the masses of $C^*$ and $A_{VE}^*$, respectively, that are mixed to give $M_S$.

$C_{C^*}$ and $C_{AVE^*}$ are the heat capacities of $C^*$ and $A_{VE}^*$, respectively.

All these variables are known or can be determined by the skilled person according to his or her knowledge.

In another preferable embodiment, in step (c), vapour $V_{H2O}$ is desorbed from $M_S$ until $M_S$ has a temperature of 1 °C to < 100 °C, preferably 10 °C to 90 °C, more preferably 12 °C to 65 °C, more preferably 15 °C to 45 °C, even more preferably 20 °C to 30 °C.

This desorption may be effected in any way known to those skilled in the art, in particular in a water desorption unit $W_{des1}$ <100> (elucidated above and in Figure 1).

To further facilitate desorption of water vapour $V_{H2O}$ from $M_S$, a subnormal pressure is preferably applied to mixture $M_S$ in step (c). In a further preferred embodiment, step (c) of the second aspect of the invention is carried out at a pressure of < 1 bar, preferably < 800 mbar, more preferably < 500 mbar, more preferably < 200 mbar.

Likewise, to further facilitate desorption of water vapour $V_{H2O}$ from $M_S$, further heat in addition to the heat from $C^*$ can be supplied to $M_S$ during step (c), for example by a heat exchanger, such as heat exchanger <108> described *supra*. Alternatively, the heat exchanger can also be used to cool (= to absorb heat from) the mixture $M_S$ at the end of the desorption, so to facilitate absorption efficiency and cooling efficency, when a first part of $M_S$ is used as liquid absorption medium $A_{VE}$ and a second part of $M_S$ is used as coolant $C$, respectively.

Preferably, in step (c), water vapour $V_{H2O}$ is desorbed from $M_S$ until $M_S$ has a water content so that the total weight in $M_S$ of all salts of structure $Q^+A^-$, $Q^+(R^1O)_2PO_2^-$, $(Q^+)_2R^2OPO_3^{2-}$, $Q^+M^+R^3OPO_3^{2-}$ is at least 70 weight-% based on the total weight of the aqueous solution. It is yet more preferable that in step (c), water vapour $V_{H2O}$ is desorbed from $M_S$ until $M_S$ has a water content so that the total weight in $M_S$ of all salts of the structure $Q^+A^-$, $Q^+(R^1O)_2PO_2^-$, $(Q^+)_2R^2OPO_3^{2-}$, $Q^+M^+R^3OPO_3^{2-}$ is in the range of 70 to 99 weight-% based on the total weight of the aqueous solution. It is yet even more preferable that in step (c), water vapour $V_{H2O}$ is desorbed from $M_S$ until $M_S$ has a water content so that the total weight in $M_S$ of all salts of the structure $Q^+A^-$, $Q^+(R^1O)_2PO_2^-$, $(Q^+)_2R^2OPO_3^{2-}$, $Q^+M^+R^3OPO_3^{2-}$ is in the range of 70 to 90 weight-% based on the total weight of the aqueous solution. It is most preferable that in step (c), water vapour $V_{H2O}$ is desorbed from $M_S$ until $M_S$ has a water content so that the total weight in $M_S$ of all salts of the structure $Q^+A^-$, $Q^+(R^1O)_2PO_2^-$, $(Q^+)_2R^2OPO_3^{2-}$, $Q^+M^+R^3OPO_3^{2-}$ is in the range of 70 to 80 weight-% based on the total weight of the aqueous solution

### 4.2.4 Preferred Steps (d) and (e): Continuous process

In a preferred embodiment of the process according to the second aspect of the invention, it further comprises steps (d) and (e).

In preferred step (d), a first part of the mixture $M_S$ is contacted with further moist gas $G$. That first part of the mixture $M_S$ is thus subjected to another round of step (a) of the process according to the second aspect of the invention, and takes the role of liquid absorption medium $A_{VE}$ in that step. The water content and the temperature of $A_{VE}$ in that step (d) is preferably the water content and the temperature, respectively, of $M_S$ at the end of step (c).

In preferred step (e) further heat is transferred to the second part of the mixture $M_S$ to the power unit $PU$ to the coolant $C$. That second part of the mixture $M_S$ is thus subjected to another round of step (b) of the process according to the second aspect of the invention, and takes the role of coolant $C$ in that step.

The water content and the temperature of $C$ in that step (e) is preferably the water content and the temperature, respectively, of $M_S$ at the end of step (c).

The ratio between the first to the second part of the mixture $M_s$ is not further limited and in particular in the range of 99 : 1 to 1 : 99 (= first to second part of $M_s$ by weight), preferably 9 : 1 to 1 : 9, more preferably 4 : 1 to 1 : 4, more preferably 7 : 3 to 3 : 7, more preferably 3 : 2 to 2 : 3, most preferably 1 : 1.

The process according to the second aspect of the invention is preferably carried out in a continuous manner, as would be typically the case in a vehicle, where a continuous process of cooling the power unit and absorbing water from a moist gas would be the normal mode of operation.

### 4.2.5 Preferred Embodiment: Cooling of the interior of a vehicle or a component $O_B$

In a preferred embodiment of the process according to the second aspect of the invention, it is used for cooling air from inside the vehicle or for cooling a component $O_B$ of the vehicle, wherein $O_B$ is different from the power unit $PU$. It goes without saying that the process according to the second aspect of the invention can also be used for cooling both air from inside the vehicle and component $O_B$.

Preferably, $O_B$ is a component in the passenger area of the vehicle, such as a computer server or furnishings within the vehicle.

"Air from inside the vehicle" preferably refers to air from the passenger area of the vehicle.

"Passenger area" refers to areas where passengers usually are located during the operation of the vehicle, and also refers to the area where ridership, drivers, conductors, pilots, captains are seated during operation of the vehicle.

This preferred embodiment of the process according to the second aspect of the invention is preferably carried out in a cooling component $WIC$ <400> as elucidated above and as shown in Figure 4.

In this preferred embodiment of the process according to the second aspect of the invention, water vapour $V_{H2O}$ is condensed to obtain liquid water $L_{H2O}$. This can for example be achieved in a water condenser $W_{Con}$ <401> as shown in Figure 4 and elucidated above. The thus obtained liquid water $L_{H2O}$ then absorbs heat from the air inside the vehicle or a component of the vehicle $O_B$. This can for example be achieved in a water evaporator $W_{Ev}$, <403> as shown in Figure 4. This evaporation is the crucial step to exert the cooling effect on the air inside the vehicle or $O_B$. By this step, water vapour $V_{H2O}$* is obtained.

That water vapour $V_{H2O}$* is thus subjected to another round of step (a) of the process according to the second aspect of the invention, and in this further round takes the role of moist gas G. In other words, water vapour $V_{H2O}$* is then contacted as moist gas **G** with liquid absorption medium $A_{VE}$.

The process according to the second aspect of the invention is preferably carried out in a vehicle according to the first aspect of the invention.

4.3 Gist of the invention

The vehicle according to the first aspect of the invention and the process according to the second aspect of the invention provide a surprisingly efficient use of waste heat from the power unit by using it to dehumidify a moist gas, for example in the context of an absorption refrigeration machine in which water is the refrigerant. This efficiency is achieved by using the same at least one salt **S** as liquid absorption medium $A_{VE}$ as well as for the coolant **C** for the power unit. It was surprisingly found that the salts **S** can serve as efficient coolants in the cooling of the power unit **PU** as well as absorbing media for the water absorption unit. Since they can both be used accordingly, this makes it possible to mix them in the water desorption unit, thus allowing for efficient heat transfer from the coolant onto the absorbing media, which results in an energy efficient desorption of water vapour from the mixture of coolant and absorbent. In the prior art, this concept was not possible, as the coolants in the cooling cycle were structurally different from the absorbing media.

**Claims**

1.  A vehicle, comprising:

    a) at least one water absorption unit component **WAC** <10>, comprising

    (a-i) a liquid absorption medium $A_{VE}$ <109>,
    (a-ii) at least one water absorption unit $W_{abs}$ <200>, which is set up for contacting a moist gas **G** <210> with the liquid absorption medium $A_{VE}$ <109>, to obtain an aqueous absorption medium $A_{VE}$* <109*> with an elevated water content compared to $A_{VE}$ <109> and a gas **G**\* <210*> with a reduced water content compared to the moist gas **G** <210>,
    (a-iii) at least one water desorption unit $W_{des}$ <100>,
    (a-iv) and a circuit $U_{WAC}$ which connects the at least one water absorption unit $W_{abs}$ <200> with the at least one water desorption unit $W_{des}$ <100>, and by means of which the liquid absorption medium $A_{VE}$ <109> and the liquid absorption medium $A_{VE}$* <109*> may be circulated between the water absorption unit $W_{abs}$ <200> and the water desorption unit $W_{des}$ <100>,

    and
    b) at least one power unit component **PUC** <300>, comprising

    (b-i) a coolant **C** <301>,
    (b-ii) at least one power unit **PU,** which is set up to transfer heat from the power unit **PU** onto the coolant **C** <301>, to obtain a coolant **C**\* <301*> with an elevated heat content as compared to coolant **C** <301>,
    (b-iii) and a circuit $U_{PUC}$ which connects the at least one power unit **PU** with the at least one water desorption unit $W_{des}$ <100> and by means of which the coolant **C** <301> and the coolant **C**\* <301*> may be circulated between the at least one power unit **PU** and the at least one water desorption unit $W_{des}$ <100>,

    wherein the coolant **C** <301> and the liquid absorption medium $A_{VE}$ <109> comprise the same at least one salt **S** selected from the group consisting of $Q^+A^-$, $Q^+(R^1O)_2PO_2^-$ , $(Q^+)_2R^2OPO_3^{2-}$, $Q^+M^+R^3OPO_3^{2-}$,
    wherein $Q^+$ is a dialkylimidazolium cation,
    wherein $A^-$ is an anion selected from the group consisting of halogenide, $R*COO^-$ , $R'SO_3^-$, $HSO_4^-$, $R''SO_4^-$, HCOO ,
    wherein R\*, R', R'' are each independently of one another an alkyl group,
    wherein $R^1$, $R^2$, $R^3$ are each independently of one another an alkyl group,
    and wherein $M^+$ is an alkali metal ion,

**characterized in**

**that** the water desorption unit $W_{des}$ <101> is set up

- to at least partially desorb water by mixing coolant $C^*$ <301*> and liquid absorption medium $A_{VE}^*$ <109*>, to obtain water vapour $V_{H2O}$ <104> and a mixture $M_S$ <103>, wherein the mixture $M_S$ <103> comprises the same at least one salt $S$ comprised by the coolant $C$ <301> and the liquid absorption medium $A_{VE}$ <109>, and wherein the relative amount of water comprised by the mixture $M_S$ <103> is less than the relative amount of water comprised by the mixture of coolant $C^*$ <301*> and liquid absorption medium $A_{VE}^*$ <109*>,
- and to conduct a first part of a mixture $M_S$ <103> as liquid absorption medium $A_{VE}$ <109> from the water desorption unit $W_{des}$ <100> to the water absorption unit $W_{abs}$ <200>,
- and to conduct a second part of a mixture $M_S$ <103> as coolant $C$ <301> from the water desorption unit $W_{des}$ <100> to the power unit **PU**.

2. The vehicle according to Claim 1, which further contains

(c) at least one cooling component **WIC** <400> for cooling air from inside the vehicle or a component $O_B$ of the vehicle, wherein $O_B$ is different from the power unit **PU,** comprising

(c-i) water as a refrigerant,
(c-ii) at least one water condenser $W_{Con}$ <401> set up for at least partially condensing water vapour $V_{H2O}$ <104> into liquid water $L_{H2O}$ <402>,
(c-iii) at least one water evaporator $W_{Ev}$ <403>, set up for at least partially evaporating liquid water $L_{H2O}$ <402>, so to obtain water vapour $V_{H2O}^*$ <406>,
wherein the water evaporator $W_{Ev}$ <403> comprises a surface, which is preferably made from metal, which contacts air from inside the vehicle or which contacts $O_B$, so that heat from the air or $O_B$ can be transferred to liquid water $L_{H2O}$ <402> inside the water evaporator $W_{Ev}$ <403> to evaporate liquid water $L_{H2O}$ <402> to obtain water vapour $V_{H2O}^*$ <406>,
(c-iv) and a conduit $U_{WIC}$ which connects the at least one water desorption unit $W_{des}$ <100> with the at least one water condenser $W_{Con}$ <401>, the at least one water condenser $W_{Con}$ <401> with the at least one water evaporator $W_{Ev}$ <403>, and the at least one water evaporator $W_{Ev}$ <403> with the at least one water absorption unit $W_{abs}$ <200>, and by means of which water vapour $V_{H2O}$ <104> may be conducted from the at least one water desorption unit $W_{des}$ <100> to the at least one water condenser $W_{Con}$ <401>, and by means of which liquid water $L_{H2O}$ <402> may be conducted from the at least one water condenser $W_{Con}$ <401> to the at least one water evaporator $W_{Ev}$ <403>, and by means of which water vapour $V_{H2O}^*$ <406> may be conducted from the at least one water evaporator $W_{Ev}$ <403> as moist gas $G$ <210> to the at least one water absorption unit $W_{abs}$ <200>.

3. A process for combined cooling of a power unit **PU,** and absorbing water from a moist gas $G$ in a vehicle, comprising the following steps:

(a) contacting a moist gas $G$ with a liquid absorption medium $A_{VE}$, to obtain a liquid absorption medium $A_{VE}^*$ with an elevated water content compared to the liquid absorption medium $A_{VE}$, and a gas $G^*$ with a reduced water content compared to the moist gas $G$,
(b) contacting a coolant $C$ with a power unit **PU,** so that heat is transferred from the power unit **PU** to the coolant $C$, to obtain a coolant $C^*$ with an elevated heat content as compared to coolant $C$,
(c) at least partially desorbing water by mixing coolant $C^*$ with liquid absorption medium $A_{VE}^*$ so to obtain water vapour $V_{H2O}$ and a mixture $M_S$, wherein the mixture $M_S$ comprises the at least one salt $S$ comprised by the coolant $C$ and the liquid absorption medium $A_{VE}$, and wherein the relative amount of water comprised by the mixture $M_S$ is less than the relative amount of water comprised by the mixture of coolant $C^*$ and liquid absorption medium $A_{VE}^*$,

wherein the coolant $C$ and the liquid absorption medium $A_{VE}$ comprise the same at least one salt $S$ selected from the group consisting of $Q^+A^-$, $Q^+(R^1O)_2PO_2^-$, $(Q^+)_2R^2OPO_3^{2-}$, $Q^+M^+R^3OPO_3^{2-}$,
wherein $Q^+$ is a dialkylimidazolium cation,
wherein $A^-$ is an anion selected from the group consisting of halogenide, $R^*COO^-$, $R'SO_3^-$, $HSO_4^-$, $R''SO_4^-$, $HCOO^-$, wherein $R^*$, $R'$, $R''$ are each independently of one another an alkyl group,
wherein $R^1$, $R^2$, $R^3$ are each independently of one another an alkyl group,
and wherein $M^+$ is an alkali metal ion.

4. The process according to Claim 3, which further comprises steps (d) and (e) (d) contacting a first part of the mixture $M_S$ as liquid absorption medium $A_{VE}$ with further moist gas **G,** (e) transferring further heat from the power unit **PU** to a second part of the mixture $M_S$ as coolant **C.**

5. The process according to Claim 3 or 4, wherein in step (c) the temperature of $A_{VE}*$ is lower than the temperature of **C*** by at least 1 °C.

6. The process according to one of Claims 3 to 5, wherein in step (c), water vapour $V_{H2O}$ is desorbed from $M_S$, until $M_S$ has a temperature which is at least 1 °C lower than the temperature $T_{Mix}$ of the mixture of **C*** and $A_{VE}*$ directly after mixing.

7. The process according to one of Claims 3 to 6, wherein coolant **C*** and liquid absorption medium $A_{VE}*$ are mixed in a volume ration of **C*** (*wt.*) : $A_{VE}*$ (*wt.*) = 9 : 1 to 1 : 9.

8. The process according to one of Claims 3 to 7, wherein step (c) is carried out at a pressure of < 1 bar.

9. The process according to one of Claims 3 to 8, wherein in step (c), further heat is supplied to $M_S$ by a heat exchanger.

10. The process according to one of Claims 3 to 9, which is for cooling air from inside the vehicle or for cooling a component $O_B$ of the vehicle, wherein $O_B$ is different from the power unit **PU,**
wherein water vapour $V_{H2O}$ is condensed to obtain liquid water $L_{H2O}$,
wherein liquid water $L_{H2O}$ then absorbs heat from the air inside the vehicle or a component of the vehicle $O_B$, and is evaporated so to obtain water vapour $V_{H2O}*$,
wherein water vapour $V_{H2O}*$ is then contacted as moist gas **G** with liquid absorption medium $A_{VE}$.

11. The process according to one of Claims 4 to 10, wherein the ratio between the first part of the mixture $M_S$ in step (d) to the second part of the mixture $M_S$ in step (e) is in the range of 99 : 1 to 1 : 99 by weight.

12. The process according to one of Claims 3 to 11, which is carried out in a continuous manner.

13. The process according to one of Claims 3 to 12, carried out in the vehicle according to Claim 1 or 2.

**Fig. 1**

EP 3 792 329 A1

**Fig. 2 A**

EP 3 792 329 A1

Fig. 2 B

Fig. 3 A

Fig. 3 B

Fig. 4

Fig. 5

Europäisches
Patentamt

European
Patent Office

Office européen
des brevets

## EUROPEAN SEARCH REPORT

Application Number

EP 19 19 7503

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/210428 A1 (TOMITA AKIFUMI [JP] ET AL) 11 July 2019 (2019-07-11) * paragraphs [0040] - [0044]; figure 1 * ----- | 1-13 | INV. C09K5/04 C09K5/10 B60H1/32 |
| X | US 2017/354923 A1 (ZEHNACKER OLIVIER [DE] ET AL) 14 December 2017 (2017-12-14) * paragraphs [0003], [0007], [0012], [0016] - [0021]; figure 2; examples * ----- | 1-13 | F25B15/00 F25B27/02 B01D53/26 |
| X | US 2017/321101 A1 (JEFF YANJIE [US]) 9 November 2017 (2017-11-09) * paragraphs [0009] - [0022], [0036], [0041], [0115]; figure 1; examples * ----- | 1-13 | |
| X | MEHRDAD KHAMOOSHI ET AL: "Overview of Ionic Liquids Used as Working Fluids in Absorption Cycles", ADVANCES IN MECHANICAL ENGINEERING, vol. 5, 1 May 2013 (2013-05-01), page 620592, XP055665739, ISSN: 1687-8140, DOI: 10.1155/2013/620592 * figures; table 1 * ----- | 1-13 | TECHNICAL FIELDS SEARCHED (IPC) C09K B60H F25B B01D |

The present search report has been drawn up for all claims

| Place of search | Date of completion of the search | Examiner |
|---|---|---|
| The Hague | 19 February 2020 | Martinez Marcos, V |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.** EP 19 19 7503

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2020

| Patent document cited in search report | | | Publication date | Patent family member(s) | | | Publication date |
|---|---|---|---|---|---|---|---|
| US 2019210428 | A1 | | 11-07-2019 | CN | 108603703 | A | 28-09-2018 |
| | | | | JP | 6627540 | B2 | 08-01-2020 |
| | | | | JP | 2017138027 | A | 10-08-2017 |
| | | | | US | 2019210428 | A1 | 11-07-2019 |
| | | | | WO | 2017135160 | A1 | 10-08-2017 |
| US 2017354923 | A1 | | 14-12-2017 | CN | 107497252 | A | 22-12-2017 |
| | | | | DE | 102016210478 | A1 | 14-12-2017 |
| | | | | JP | 2017221939 | A | 21-12-2017 |
| | | | | KR | 20170141129 | A | 22-12-2017 |
| | | | | SG | 10201704817P | A | 30-01-2018 |
| | | | | TW | 201815457 | A | 01-05-2018 |
| | | | | US | 2017354923 | A1 | 14-12-2017 |
| US 2017321101 | A1 | | 09-11-2017 | CN | 105264040 | A | 20-01-2016 |
| | | | | EP | 3017013 | A1 | 11-05-2016 |
| | | | | US | 2014352351 | A1 | 04-12-2014 |
| | | | | US | 2017321101 | A1 | 09-11-2017 |
| | | | | WO | 2014193857 | A1 | 04-12-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20060130469 A1
- JP 57081910 U
- JP H03112718 A
- JP H03193525 A
- US 20120031131 A1
- JP 2002234336 A
- JP 2012141101 A
- JP H11159905 A
- WO 2010088978 A1

### Non-patent literature cited in the description

- **G. VICATOS ; J. GRYZAGORIDIS ; S. WANG.** *Journal of Energy in Southern Africa,* 2008, vol. 19 (4), 6-11
- **A. KHAN ; H. M. ALI ; S. KHUSHNOOD ; S. S. SHAH ; M. NOUMAN ALI.** *Technical Journal, University of Engineering and Technology (UET),* 2018, vol. 23 (2), 24-34
- **P. SHARMA ; M. PARWAL ; E. AYYAR.** *SAE Technical Paper 2018-28-0013,* 2018
- **M. SEILER ; A. KÜHN ; F. ZIEGLER ; X. WANG.** Sustainable Cooling Strategies Using New Chemical System Solutions. *Ind. Eng. Chem. Res.,* 2013, vol. 52, 16519-16546